(19) Europäisches Patentamt / European Patent Office / Office européen des brevets

(11) **EP 3 923 380 B1**

(12) **EUROPEAN PATENT SPECIFICATION**

(45) Date of publication and mention of the grant of the patent:
**29.04.2026  Bulletin 2026/18**

(21) Application number: **21177241.3**

(22) Date of filing: **01.06.2021**

(51) International Patent Classification (IPC):
**H01M 4/131** *(2010.01)*    **H01M 4/36** *(2006.01)*
**H01M 4/525** *(2010.01)*

(52) Cooperative Patent Classification (CPC):
**H01M 4/366; H01M 4/131; H01M 4/525;**
H01M 2004/028; Y02E 60/10

(54) **COMPOSITE CATHODE ACTIVE MATERIAL, CATHODE INCLUDING THE SAME, LITHIUM BATTERY EMPLOYING THE CATHODE, AND PREPARATION METHOD THEREOF**

VERBUNDKATHODENAKTIVMATERIAL, KATHODE DAMIT, LITHIUMBATTERIE MIT ANWENDUNG DER KATHODE UND HERSTELLUNGSVERFAHREN DAFÜR

MATÉRIAU ACTIF DE CATHODE COMPOSITE, CATHODE LE COMPRENANT, BATTERIE AU LITHIUM UTILISANT LA CATHODE ET PROCÉDÉ DE PRÉPARATION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2020  KR 20200066016**

(43) Date of publication of application:
**15.12.2021  Bulletin 2021/50**

(73) Proprietor: **Samsung SDI Co., Ltd.**
**Yongin-si, Gyeonggi-do 17084 (KR)**

(72) Inventors:
• **SON, Inhyuk**
  **17084 Yongin-si (KR)**
• **MAH, Sangkook**
  **17084 Yongin-si (KR)**
• **JO, Sungnim**
  **17084 Yongin-si (KR)**
• **KAPYLOU, Andrei**
  **17084 Yongin-si (KR)**

• **KIM, Guesung**
  **17084 Yongin-si (KR)**
• **MOON, Jongseok**
  **17084 Yongin-si (KR)**

(74) Representative: **Marks & Clerk LLP**
**15 Fetter Lane**
**London EC4A 1BW (GB)**

(56) References cited:
**US-A1- 2010 310 940    US-A1- 2014 377 655**
**US-A1- 2015 037 680**

• **DOU SHUMEI: "Review and prospect of layered lithium nickel manganese oxide as cathode materials for Li-ion batteries", vol. 17, no. 4, 1 April 2013 (2013-04-01), DE, pages 911 - 926, XP055843229, ISSN: 1432-8488, Retrieved from the Internet <URL:https://link.springer.com/content/pdf/10.1007/s10008-012-1977-z.pdf> DOI: 10.1007/s10008-012-1977-z**

**Description**

**BACKGROUND**

**1. Field**

One or more aspects of embodiments of the present invention relate to a composite cathode active material, a cathode including the composite cathode active material and a lithium battery employing the cathode. A method of preparing the composite cathode active material is also disclosed herein to aid understanding of the present invention.

**2. Description of the Related Art**

In order to meet the desired miniaturization and high performance of various devices, in addition to miniaturization and weight reduction of lithium batteries, high energy density of lithium batteries is becoming more important. Among other things, high-capacity lithium batteries are becoming more important.

In order to implement lithium batteries suitable for the above uses, a cathode active material having a high capacity is being proposed.

Nickel-based cathode active materials in the art have poor lifetime characteristics and poor thermal stability due to side reactions.

Accordingly, there is a need (or desire) for a method capable of preventing or reducing the deterioration of battery performance while including a nickel-based cathode active material.

US 2015/037680 A1 relates to a composite cathode active material, a lithium battery including such a composite and a preparation method for such a composite.

**SUMMARY**

One or more aspects of embodiments of the present disclosure are directed toward a novel composite cathode active material capable of preventing or reducing the deterioration of battery performance by suppressing or reducing the side reactions of the composite cathode active material.

One or more aspects of embodiments of the present disclosure are directed toward a cathode including the composite cathode active material.

One or more aspects of embodiments of the present disclosure are directed toward a lithium battery employing the cathode.

Also disclosed herein to aid understanding of the present invention is a method of preparing the composite cathode active material.

Additional aspects will be set forth in part in the description which follows and, in part, will be apparent from the description, or may be learned by practice of the presented embodiments of the disclosure.

According to one or more embodiments, a composite cathode active material includes:

a core including a lithium transition metal oxide; and
a shell disposed (e.g., positioned) on and conformed to a surface of the core,
wherein the shell includes at least one first metal oxide represented by Formula $M_aO_b$ (wherein, $0<a\leq3$, $0<b<4$, and when a is 1, 2, or 3, b is not an integer), a second metal oxide represented by Formula $M_aO_c$ (wherein, $0<a\leq3$, $0<c\leq4$, and when a is 1, 2, or 3, c is an integer) and a carbonaceous material,
the first metal oxide is placed in (e.g., disposed within) a carbonaceous material matrix, M is at least one metal selected from groups 2 to 13, group 15, and group 16 of the periodic table of elements,
the lithium transition metal oxide contains nickel, the content of nickel is about 80 mol% or more based on the total moles of transition metals in the lithium transition metal oxide, the second metal oxide includes the same metal as the first metal oxide, and a ratio c/a of c to a in the second metal oxide is greater than a ratio b/a of b to a in the first metal oxide.

According to one or more embodiments,
a cathode includes the composite cathode active material.

According to one or more embodiments,
a lithium battery includes the cathode.

Also disclosed herein to aid understanding of the present invention is a method of preparing a composite cathode active material, includes:

providing a lithium transition metal oxide;

providing a composite; and

mechanically milling the lithium transition metal oxide and the composite,

wherein the composite includes at least one first metal oxide represented by Formula $M_aO_b$ (wherein, $0<a\leq3$, $0<b<4$, and when a is 1, 2, or 3, b is not an integer), and a carbonaceous material,

the first metal oxide is in a carbonaceous material matrix, M is at least one metal selected from groups 2 to 13, group 15, and group 16 of the periodic table of elements,

the lithium transition metal oxide contains nickel, and the content of nickel is about 80 mol% or more based on the total moles of transition metals in the lithium transition metal oxide. At least some of the above and other features of the invention are set out in the claims.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a graph illustrating XPS images of bare NCA91, the composite prepared in Preparation Example 1, and the composite cathode active material prepared in Example 3;

FIG. 2 is a graph illustrating Raman spectrums of the composite prepared in Preparation Example 1, and the composite cathode active material prepared in Example 3; and

FIG. 3 is a schematic view of a lithium battery according to an embodiment.

## DETAILED DESCRIPTION

Reference will now be made in more detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," "one of", and "selected from", when preceding a list of elements, modify the entire list of elements and do not modify the individual elements of the list. Further, the use of "may" when describing embodiments of the present disclosure refers to "one or more embodiments of the present disclosure".

Because the present disclosure to be described below may be variously modified and may have various embodiments, some embodiments are illustrated in the drawings and described in more detail in the detailed description. However, this is not intended to limit the present disclosure to any specific embodiment, and it should be understood to include all modifications, equivalents, and/or substitutes included in the technical scope of the present disclosure.

The terms used below are only used to describe specific embodiments and are not intended to limit the present disclosure. Singular expressions include plural expressions unless the context clearly indicates otherwise. Hereinafter, it will be further understood that the terms "comprise", "include" or "have," when used in this specification, specify the presence of stated features, integers, steps, operations, elements, and/or components, but do not preclude the presence or addition of one or more other features, integers, steps, operations, elements, components, and/or groups thereof. The "/" used below may be interpreted as "and" or as "or" depending on the situation.

In the drawings, thickness is enlarged or reduced in order to clearly express various layers and regions. Throughout the specification, the same reference numerals designate the same components. Throughout the specification, when a component such as a layer, a film, a region, or a plate is mentioned to be placed "on" another component, it will be understood that it may be directly on another component (without any intervening components therebetween) or that another component may be interposed therebetween. Throughout the specification, although the terms "first", "second", "third", etc., may be used herein to describe various elements, components, regions, and/or layers, these elements, components, regions, and/or layers should not be limited by these terms. These terms are only used to distinguish one component from another component.

Spatially relative terms, such as "beneath," "below ," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinafter, a composite cathode active material according to embodiments, a cathode including the composite cathode active material, a lithium battery including the cathode, and a method of preparing the composite cathode active material will be described in more detail.

A composite cathode active material according to embodiments includes: a core including a lithium transition metal oxide; and a shell disposed (e.g., positioned) on and conforming to a surface of the core, wherein the shell includes at least one first metal oxide represented by Formula $M_aO_b$ (0<a≤3, 0<b<4, when a is 1, 2, or 3, b is not an integer), a second metal oxide represented by Formula $M_aO_c$ (wherein, 0<a≤3, 0<c≤4, and when a is 1, 2, or 3, c is an integer) and carbonaceous material, the first metal oxide is placed in a carbonaceous material matrix, M is at least one metal selected from groups 2 to 13, group 15, and group 16 of the Periodic Table of Elements, the lithium transition metal oxide contains nickel, the content of nickel is 80 mol% or more based on the total moles of transition metal, the second metal oxide includes the same metal as the first metal oxide, and a ratio c/a of c to a in the second metal oxide is greater than a ratio b/a of b to a in the first metal oxide. For example, the total moles of transition metals means the total moles of elements other than lithium and oxygen (and, if present, F, S, Br and Cl) in the lithium transition metal oxide.

Hereinafter, a theoretical basis for the excellent (or improved) effect of the composite cathode active material according to embodiments of the present disclosure will be described, but this basis is provided solely to aid in understanding of the present disclosure and is not intended to limit the present disclosure in any way.

A shell including a first metal oxide and carbonaceous material is disposed on and/or conformed to a core of the composite cathode active material. Uniform (e.g., substantially uniform) coating of related art carbonaceous material on the core is difficult to attain due to aggregation (e.g., aggregation of particles comprising the shell). In contrast, the composite cathode active material of the present embodiments uses a composite including at least one first metal oxide or a plurality of first metal oxides disposed within a carbonaceous material matrix, thereby preventing or reducing the aggregation of carbonaceous material and placing a uniform (e.g., substantially uniform) shell on the core. Accordingly, a contact between a core and an electrolyte may be effectively blocked or reduced, thereby preventing or reducing the side reactions that may occur due to the contact between the core and the electrolyte. Further, reduction ($Ni^{3+}$->$Ni^{2+}$) of nickel ions due to the electrolyte and the mixing of cations due to the electrolyte may be suppressed or reduced, thereby preventing or reducing the formation of a resistance layer such as a NiO phase. Moreover, elution of nickel ions may also be suppressed or reduced. The carbonaceous material may be for example a crystalline carbonaceous material. The carbonaceous material may be a carbonaceous nanostructure. The carbonaceous material may be a graphene. In this case, because the shell including carbonaceous material (e.g. graphene) has flexibility, a change in volume of the composite cathode active material may be easily (or suitably) accepted during charging and discharging of the battery, and occurrence of cracks in the composite cathode active material may be suppressed or reduced. Because carbonaceous material (e.g. graphene) has high electronic conductivity, interfacial resistance between the composite cathode active material and the electrolyte decreases. Therefore, despite the introduction of a shell containing carbonaceous material (e.g. graphene), internal resistance of a lithium battery is maintained or reduced. Further, because the first metal oxide has voltage resistance, it is possible to prevent or reduce the deterioration of the lithium transition metal oxide included in the core during charging and discharging of the battery at a high voltage. As a result, the cycle characteristics and high-temperature stability of the lithium battery including the composite cathode active material may be improved. The shell may include, for example, one kind of first metal oxide or two or more kinds of different first metal oxides.

Further, in the composite cathode active material, the lithium transition metal oxide has a nickel content of 80 mol% or more based on the total moles of transition metal(s), and the shell including the first metal oxide and carbonaceous material is disposed on the core, thereby simultaneously (or concurrently) providing high discharge capacity and improved cycle characteristics. Accordingly, the composite cathode active material having a nickel content of 80 mol% or more may provide improved capacity and excellent lifetime characteristics as compared with a composite cathode active material having a relatively low nickel content.

The metal included in the first metal oxide may be at least one selected from Al, Nb, Mg, Sc, Ti, Zr, V, W, Mn, Fe, Co, Pd, Cu, Ag, Zn, Sb, and Se. The first metal oxide may be, for example, at least one selected from $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2). Because such a first metal oxide is placed in a carbonaceous material matrix, uniformity (e.g., substantial uniformity) of the shell placed on the core is improved, and voltage resistance of the composite cathode active material is further improved. For example, the shell includes $Al_2O_x$ (0<x<3) as the first metal oxide.

The shell further includes at least one kind of second metal oxide represented by $M_aO_c$ (0<a≤3, 0<c≤4, when a is 1, 2, or 3, c is an integer). The second metal oxide includes the same metal as the first metal oxide, and the ratio c/a of c to a in the second metal oxide is greater than the ratio b/a of b to a in the first metal oxide. In other words, c/a >b/a. In one or more embodiments, the second metal oxide may be selected from $Al_2O_3$, NbO, $NbO_2$, $Nb_2O_5$ MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. The first metal oxide may be obtained by reducing a part or all of the second metal oxide. Accordingly, the first metal oxide has a lower oxygen content and a lower metal oxidation number than the second metal oxide. For example, the shell includes $Al_2O_x$ (0<x<3) as the first metal oxide and $Al_2O_3$ as the second metal oxide.

In the composite cathode active material, for example, the carbonaceous material included in the shell is chemically bonded to the transition metal of the lithium transition metal oxide included in the core through a chemical bond. For example, a carbon atom (C) of the carbonaceous material in the shell is chemically bonded to a transition metal (Me) of the lithium transition metal oxide (using an oxygen atom as an intermediate) through C-O-Me bonding (for example, C-O-Ni bonding). The carbonaceous material included in the shell is chemically bonded to the lithium transition metal oxide included in the core to allow the core and the shell to be a composite. Therefore, the composite of the core and the shell is distinguished from a simple physical mixture of carbonaceous material and lithium transition metal oxide.

Further, the first metal oxide and carbonaceous material included in the shell are chemically bonded through a chemical bond. Here, the chemical bond is covalent bonding or ionic bonding. The covalent bond is, for example, a bond including at least one selected from an ester group, an ether group, a carbonyl group, an amide group, a carbonate anhydride group, and an acid anhydride group. The ionic bond is, for example, a bond including a carboxylic acid ion, an ammonium ion, and/or an acyl cation group.

The thickness of the shell is, for example, about 1 nm to about 5 μm, about 1 nm to about 1 μm, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, about 1 nm to about 20 nm, or about 1 nm to about 10 nm. When the thickness of the shell is within any of the above ranges, an increase in internal resistance of a lithium battery including the composite cathode active material is suppressed or reduced.

The composite cathode active material may further include: a third metal doped on the core; or a third metal oxide applied on the core. The shell may be disposed (e.g., provided) on the doped third metal or the applied third metal oxide. For example, after a third metal is doped on the surface of the lithium transition metal oxide included in the core or a third metal oxide is applied on the surface of the lithium transition metal oxide, the shell may be placed on the third metal and/or the third metal oxide. For example, the composite cathode active material may include a core; an intermediate layer disposed on the core; and a shell disposed on the intermediate layer, wherein the intermediate layer may include a third metal or a third metal oxide. The third metal may be at least one metal selected from Al, Zr, W, and Co, and the third metal oxide may be $Al_2O_3$, $Li_2O$-$ZrO_2$, $WO_2$, CoO, $Co_2O_3$, $Co_3O_4$, and/or the like.

The shell included in the composite cathode active material includes at least one selected from a composite including the first metal oxide, the second metal oxide and the carbonaceous material (for example, graphene) and a resulting product of milling of the composite, and the first metal oxide is placed in a carbonaceous material matrix, for example, graphene matrix. The shell is prepared from a composite including the first metal oxide and the carbonaceous material. The composite further includes a second metal oxide in addition to the first metal oxide. The composite may include, for example, two or more kinds of first metal oxides. The composite may include, for example, two or more kinds of first metal oxides and two or more kinds of second metal oxides.

The content of the composite in the composite cathode active material may be about 3wt% or less, about 2wt% or less, about 1wt% or less, about 0.5wt% or less, or about 0.2wt% or less, based on the total weight of the composite cathode active material. The content of the composite may be about 0.01wt% to about 3wt%, about 0.01wt% to about 1wt%, about 0.01wt% to about 0.7wt%, about 0.01wt% to about 0.6wt%, about 0.1wt% to about 0.5wt%, about 0.01wt% to about 0.2wt%, about 0.01wt% to about 0.1wt%, or about 0.03wt% to about 0.07wt%, based on the total weight of the composite cathode active material. When the composite cathode active material includes the composite within any of these ranges, the cycle characteristics of the lithium battery including the composite cathode active material are further improved.

At least one selected from the first metal oxide and second metal oxide included in the composite may has an average particle diameter of about 1 nm to about 1 μm, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. The first metal oxide and/or the second metal oxide may be more uniformly distributed in the carbonaceous material matrix (for example, a graphene matrix) of the composite because the first metal oxide and/or the second metal oxide has a particle diameter within any of these nanometer ranges. Therefore, such a composite may be uniformly (e.g., substantially uniformly) applied on the core to form a shell. Further, the first metal oxide and/or the second metal oxide may be more evenly disposed (e.g., distributed) on the core because the first metal oxide and/or the second metal oxide has a particle diameter within any of the above nanometer ranges. Therefore, the first metal oxide and/or the second metal oxide may be uniformly (e.g., substantially uniformly) disposed on the core, thereby more effectively exhibiting voltage resistance characteristics.

The average particle diameter of the first metal oxide and the second metal oxide is measured by a measurement apparatus using a laser diffraction method and/or a dynamic light scattering method. For example, the average particle diameter of the first metal oxide and the second metal oxide may be measured using a laser scattering particle size distribution meter (for example, LA-920 of Horiba Ltd.), and is a value of the median diameter (D50) when the metal oxide particles are accumulated to 50 % from small particles in volume conversion.

The uniformity deviation of at least one selected from the first metal oxide and second metal oxide included in the composite may be about 3 % or less, about 2 % or less, or about 1 % or less. The uniformity may be obtained, for example, by X-ray photoelectron spectroscopy (XPS). Accordingly, at least one selected from the first metal oxide and second metal oxide included in the composite may have a uniformity deviation of about 3 % or less, about 2 % or less, or about 1 % or less, and may be uniformly (e.g., substantially uniformly) distributed.

The carbonaceous material included in the composite may have a branched structure, and at least one selected from the first metal oxide and the second metal oxide may be distributed in the branched structure of the carbonaceous material. The branched structure of the carbonaceous material includes a plurality of carbonaceous material particles contacting each other. Since the carbonaceous material has a branched structure, various conductive paths may be provided. For example, the carbonaceous material included in the composite may be or have a graphene. For example, the branched structure of the graphene includes a plurality of graphene particles contacting each other. Because the graphene has a branched structure, various conductive paths may be provided.

The carbonaceous material included in the composite may have a spherical structure, and at least one selected from the first metal oxide and the second metal oxide may be distributed in the spherical structure. The spherical structure of the carbonaceous material may have a size of about 50 nm to 300 nm. A plurality of carbonaceous materials having a spherical structure may be provided. Since the carbonaceous material has a spherical structure, the composite may have a robust structure. For example, the carbonaceous material included in the composite may be or include a graphene. For example, the spherical structure of the graphene may have a size of about 50 nm to about 300 nm. A plurality of graphenes having a spherical structure may be provided. Because the graphene has a spherical structure, the composite may have a robust structure.

The carbonaceous material included in the composite may have a spiral structure in which the plurality of spherical structures are connected to each other, and at least one selected from the first metal oxide and the second metal oxide may be distributed in the spherical structures of the spiral structure. The spiral structure of the carbonaceous material may have a size of about 500 nm to 100 $\mu$m. Since the carbonaceous material has a spiral structure, the composite may have a robust structure. The carbonaceous material included in the composite may be or include a graphene. For example, the spiral structure of the graphene may have a size of about 500 nm to about 100 $\mu$m. Because the graphene has a spiral structure, the composite may have a robust structure.

The carbonaceous material included in the composite may have a cluster structure in which the plurality of spherical structures are aggregated with each other, and at least one selected from the first metal oxide and the second metal oxide may be distributed in the spherical structures of the cluster structure. The cluster structure of the carbonaceous material may have a size of about 5 $\mu$m to about 1 mm or about 0.5 mm to 10 cm. Since the carbonaceous material has a cluster structure, the composite may have a robust structure. The carbonaceous material included in the composite may be or include a graphene. For example, the cluster structure of the graphene may have a size of about 5 $\mu$m to 1 mm or about 0.5 mm to about 10 cm. Because the graphene has a cluster structure, the composite may have a robust structure. The size of the spherical structure, the spiral structure, or the cluster structure may be measured by Scanning Electron Microscope (SEM) or Transmission Electron Microscopy (TEM). The size of the spherical structure, the spiral structure, or the cluster structure may be an average diameter of the structures.

The composite may be a crumpled faceted-ball structure, and at least one selected from the first metal oxide and the second metal oxide may be distributed inside the structure or on the surface of the structure. When the composite is such a faceted-ball structure, the composite may be easily applied on the irregular surface irregularities of the core.

The composite may be a planar structure, and at least one selected from the first metal oxide and the second metal oxide may be distributed inside the structure or on the surface of the structure. When the composite is such a two-dimensional planar structure, the composite may be easily applied on the irregular surface irregularities of the core.

The carbonaceous material included in the composite may extend from the first metal oxide by a distance of about 10 nm or less, and may include at least 1 to 20 carbonaceous material layers. For example, since a plurality of carbonaceous material layers are laminated, carbonaceous material having a total thickness of 12 nm or less may be placed on the first metal oxide. For example, the total thickness of the carbonaceous material may be about 0.6 nm to about 12 nm. The carbonaceous material included in the composite may be or include a graphene. For example, because a plurality of graphene layers (e.g. at least 1 to 20 graphene layers) are laminated, graphene (e.g. at least 1 to 20 graphene) having a total thickness of about 12 nm or less may be placed on the first metal oxide. For example, the total thickness of the graphene (e.g. at least 1 to 20 graphene) may be about 0.6 nm to about 12 nm.

The core included in the composite cathode active material includes, for example, a lithium transition metal oxide represented by Formula 1 below:

$$\text{Formula 1} \qquad Li_aNi_xCo_yM_zO_{2-b}A_b.$$

In Formula 1 above,

$$1.0 \leq a \leq 1.2,\ 0 \leq b \leq 0.2,\ 0.8 \leq x < 1,\ 0 < y \leq 0.3,\ 0 < z \leq 0.3,\ \text{and } x+y+z=1,$$

M is at least on selected from manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and A is F, S, Cl, Br, or a combination thereof.

The core included in the composite cathode active material includes, for example, a lithium transition metal oxide represented by any one of Formulae 2 and 3 below:

$$\text{Formula 2} \qquad LiNi_xCo_yMn_zO_2$$

$$\text{Formula 3} \qquad LiNi_xCo_yAl_zO_2.$$

In Formulae 2 and 3, $0.8 \leq x \leq 0.95$, $0 < y \leq 0.2$, $0 < z \leq 0.2$, and $x+y+z=1$.

Each of the lithium transition metal oxides of Formulae 1 to 3 has a relatively high nickel content of about 80mol% or more, about 85mol% or more, or about 90mol% or more based on the total moles of transition metals (e.g. based on 100mol% of the total amount of Ni, Co and M for Formula 1, based on 100mol% of the total amount of Ni, Co and Mn for Formula 2, and based on 100mol% of the total amount of Ni, Co and Al for Formula 3), and may provide excellent (or improved) initial capacity, roomtemperature lifetime characteristics and high-temperature lifetime characteristics.

A cathode according to one or more embodiments includes the above-described composite cathode active material. Because the cathode includes the above-described composite cathode active material, the cathode provides improved cycle characteristics and thermal stability.

The cathode may be manufactured by the following method, but the manufacturing method thereof is not necessarily limited to the exemplified method and may be adjusted according to required conditions.

First, a cathode active material composition is prepared by mixing the above-described composite cathode active material, a conductive agent, a binder, and a solvent. The prepared cathode active material composition is directly applied and dried on an aluminum current collector to form a cathode plate provided with a cathode active material layer. In one or more other embodiments, a film obtained by casting the cathode active material composition on a separate support and then separating the composition from the support is laminated on the aluminum current collector to form a cathode plate provided with a cathode active material layer.

As the conductive agent, carbon black, graphite fine particles, natural graphite, artificial graphite, acetylene black, Ketjen black, carbon fiber; carbon nanotubes; metal powder, metal fiber and/or metal tube such as copper, nickel, aluminum, and/or silver; and/or conductive polymers such as polyphenylene derivatives may be used, but the present disclosure is not limited thereto. Any suitable conductive agent may be used.

As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, and/or a styrene butadiene rubber polymer may be used, but the present disclosure is not limited thereto. Any suitable binder may be used. As the solvent, N-methylpyrrolidone (NMP), acetone, and/or water may be used, but the present disclosure is not limited thereto. Any suitable solvent may be used.

In one or more embodiments, it is also possible to form pores in the electrode plate by further adding a plasticizer and/or a pore former to the cathode active material composition.

The contents (e.g., amounts) of the composite cathode active material, conductive agent, binder, and solvent used in the cathode may be at levels suitable for use in lithium batteries. Depending on the use and configuration of the lithium battery, one or more of the conductive agent, the binder, and the solvent may be omitted.

In one or more embodiments, the cathode may additionally include a general cathode active material other than the above-described composite cathode active material.

As the general cathode active material, any suitable lithium-containing metal oxide may be used without limitation. For example, at least one selected from composite oxides of lithium and a metal selected from cobalt, manganese, nickel, and a combination thereof may be used as the lithium-containing metal oxide. For example, a compound represented by any one Formula selected from $Li_aA_{1-b}B_bD_2$(where, $0.90 \le a \le 1$, and $0 \le b \le 0.5$); $Li_aE_{1-b}B_bO_{2-c}D_c$(where, $0.90 \le a \le 1$, $0 \le b \le 0.5$, and $0 \le c \le 0.05$); $LiE_{2-b}B_bO_{4-c}D_c$(where, $0 \le b \le 0.5$, and $0 \le c \le 0.05$); $Li_aNi_{1-b-c}CO_bB_cD_\alpha$ (where, $0.90 \le a \le 1$, $0 \le b \le 0.5$, $0 \le c \le 0.05$, and $0 < \alpha \le 2$); $Li_aNi_{1-b-c}Co_bB_cO_{2-\alpha}F_\alpha$(where, $0.90 \le a \le 1$, $0 \le b \le 0.5$, $0 \le c \le 0.05$, and $0 < \alpha < 2$); $Li_aNi_{1-b-c}Co_bB_cO_{2-\alpha}F_2$(where, $0.90 \le a \le 1$, $0 \le b \le 0.5$, $0 \le c \le 0.05$, and $0 < \alpha < 2$); $Li_aNi_{1-b-c}Mn_bB_cD_\alpha$ (where, $0.90 \le a \le 1$, $0 \le b \le 0.5$, $0 \le c \le 0.05$, and $0 < \alpha \le 2$); $Li_aNi_{1-b-c}Mn_bB_cO_{2-\alpha}F_\alpha$(where, $0.90 \le a \le 1$, $0 \le b \le 0.5$, $0 \le c \le 0.05$, and $0 < \alpha < 2$); $Li_aNi_{1-b-c}Mn_bB_cO_{2-\alpha}F_2$(where, $0.90 \le a \le 1$, $0 \le b \le 0.5$, $0 \le c \le 0.05$, and $0 < \alpha < 2$); $Li_aNi_bE_cG_dO_2$(where, $0.90 \le a \le 1$, $0 \le b \le 0.9$, $0 \le c \le 0.5$, and $0.001 \le d \le 0.1$);$Li_aNi_bCo_cMn_dGeO_2$(where, $0.90 \le a \le 1$, $0 \le b \le 0.9$, $0 \le c \le 0.5$, $0 \le d \le 0.5$, and $0.001 \le e \le 0.1$);$Li_aNiG_bO_2$(where, $0.90 \le a \le 1$, and $0.001 \le b \le 0.1$); $Li_aCoG_bO_2$(where, $0.90 \le a \le 1$, and $0.001 \le b \le 0.1$);$Li_aMnG_bO_2$(where, $0.90 \le a \le 1$, and $0.001 \le b \le 0.1$);$Li_aMn_2G_bO_4$(where, $0.90 \le a \le 1$, and $0.001 \le b \le 0.1$);$QO_2$; $QS_2$; $LiQS_2$; $V_2O_5$; $LiV_2O_5$; $LiIO_2$; $LiNiVO_4$; $Li_{(3-f)}J_2(PO_4)_3$($0 \le f \le 2$); $Li_{(3-f)}Fe_2(PO_4)_3$($0 \le f \le 2$); and $LiFePO_4$.

In the Formulae representing the above-described compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

A compound in which a coating layer is provided on the surface of the above-described compound may be used, and a mixture of the above-described compound and the compound provided with the coating layer may also be used. The coating layer provided on the surface of the above-described compound may include a coating element compound such as an oxide of a coating element, a hydroxide of a coating element, an oxyhydroxide of a coating element, an oxycarbonate of a coating element, and/or a hydroxycarbonate of a coating element. The compound constituting this coating layer may be amorphous or crystalline. The coating element included in the coating layer may be Mg, Al, Co, K, Na, Ca, Si, Ti, V, Sn, Ge, Ga, B, As, Zr, or a mixture thereof. The method of forming the coating layer is selected within a range that does not adversely affect the physical properties of the cathode active material. The coating method is, for example, spray coating, dipping method, and/or the like. A more detailed description of the coating method will not be provided because it may be well understood by those in the art.

A lithium battery according to one or more embodiments employs a cathode including the above-described composite cathode active material.

Because the lithium battery employs a cathode including the above-described composite cathode active material, improved cycle characteristics and thermal stability are provided.

The lithium battery may be manufactured, for example, by the following method, but the present disclosure is not necessarily limited to the exemplified method and may be adjusted according to required conditions.

First, a cathode is prepared according to the above-described method of preparing a cathode.

Next, an anode is prepared as follows. The anode is prepared in substantially the same manner as the cathode, except that an anode active material is used instead of the composite cathode active material. Further, in an anode active material composition, a conductive agent, a binder, and a solvent, which are substantially the same as those in the cathode, may be used.

For example, an anode active material, a conductive agent, a binder, and a solvent are mixed to prepare an anode active material composition, and this anode active material composition is directly applied onto a copper current collector to prepare an anode plate. In one or more other embodiments, a film obtained by casting the prepared anode active material composition on a separate support and then separating the composition from the support is laminated on the copper current collector to prepare an anode plate.

Any suitable anode active material may be used. For example, the anode active material includes at least one selected from a lithium metal, a metal alloyable with lithium, a transition metal oxide, a non-transition metal oxide, and a carbon-based material.

Examples of the metal alloyable with lithium include Si, Sn, Al, Ge, Pb, Bi, Sb, an Si-Y alloy (Y is an alkali metal, an alkali-earth metal, a group 13 element, a group 14 element, a transition metal, an rare earth element, or a combination thereof, and Y is not Si), and an Sn-Y alloy (Y is an alkali metal, an alkali-earth metal, a group 13 element, a group 14 element, a transition metal, an rare earth element, or a combination thereof, and Y is not Sn). The element Y is, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide is, for example, lithium titanium oxide, vanadium oxide, and/or lithium vanadium oxide.

The non-transition metal oxide is, for example, $SnO_2$ and/or $SiO_x$ (0<x<2).

The carbon-based material is, for example, crystalline carbon, amorphous carbon, or a mixture thereof. The crystalline carbon is, for example, graphite such as plate-like, flake-like, spherical and/or fibrous natural graphite, and/or artificial graphite. The amorphous carbon is, for example, soft carbon (low-temperature fired carbon), hard carbon, mesophase pitch carbide, and/or fired coke.

The contents (e.g., amounts) of the anode active material, conductive agent, binder, and solvent used in the anode may be at levels suitable for use in lithium batteries. Depending on the use and configuration of the lithium battery, one or more of the conductive agent, the binder, and the solvent may be omitted.

Next, a separator may be inserted between the cathode and the anode is prepared.

Any separator may be used as long as it is suitable for use in lithium batteries. As the separator, for example, a separator having low resistance to ion movement of an electrolyte and/or an excellent (or suitable) electrolyte-moisturizing ability may be used. The separator may be formed of a non-woven fabric or a woven fabric including at least one selected from fiberglass, polyester, Teflon®, polyethylene, polypropylene, polytetrafluoroethylene (PTFE), and a combination thereof. For a lithium-ion battery, as an example, a rollable separator including polyethylene, polypropylene, and/or the like may be used, and for a lithium-ion polymer battery, a separator having excellent (or suitable) organic electrolyte impregnation ability may be used.

The separator may be manufactured by the following method, but the present disclosure is not necessarily limited to the exemplified method and may be adjusted according to required conditions.

First, a polymer resin, a filler, and a solvent are mixed to prepare a separator composition. The separator composition is directly applied and dried on an electrode to form a separator. In one or more other embodiments, a film obtained by casting and drying the separator composition on a support and then separating the composition from the support is laminated on the electrode to form a separator.

The polymer used for manufacturing the separator is not particularly limited, and any polymer may be used as long as it is suitable for use for the binder of an electrode plate. For example, as the polymer, a vinylidene fluoride/hexafluoropropylene copolymer, polyvinylidene fluoride (PVDF), polyacrylonitrile, polymethyl methacrylate, or a mixture thereof may be used.

Next, an electrolyte is prepared.

The electrolyte is, for example, an organic electrolyte. The organic electrolyte is prepared, for example, by dissolving a lithium salt in an organic solvent.

As the organic solvent, any suitable organic solvent may be used. The organic solvent is, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethylsulfoxide, dioxane,1 ,2-dimethoxyethane, sulfolane, dichloroethane, chlorobenzene, nitrobenzene, diethylene glycol, dimethyl ether, or a mixture thereof.

As the lithium salt, any suitable lithium salt may be used. The lithium salt is, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(here, x and y are natural numbers), LiCl, LiI, or a mixture thereof.

In one or more other embodiments, the electrolyte is a solid electrolyte. The solid electrolyte is, for example, boron oxide and/or lithium oxynitride, but is not limited thereto. Any suitable solid electrolyte may be used. The solid electrolyte is formed on the anode by a method such as sputtering, or a separate solid electrolyte sheet is laminated on the anode.

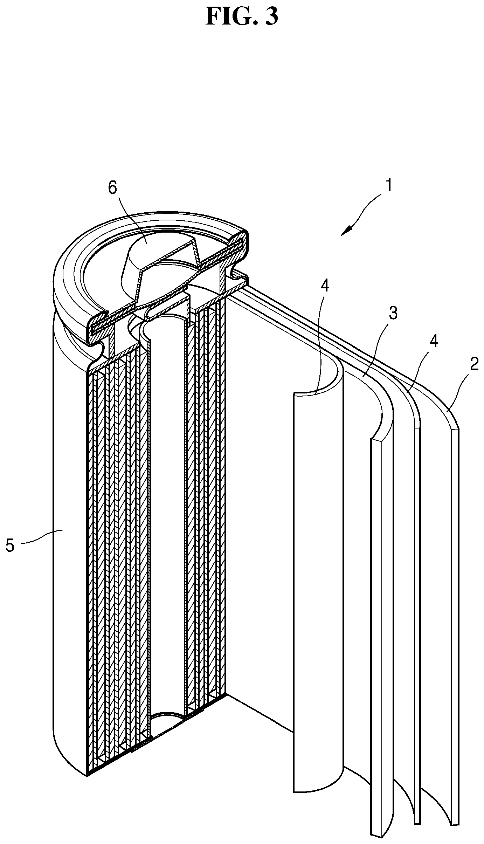

As shown in FIG. 3, a lithium battery 1 includes a cathode 3, an anode 2, and a separator 4. The cathode 3, the anode 2, and the separator 4 are wound or folded to be accommodated in a battery case 5. An organic electrolyte is injected into the battery case 5, and the battery case 5 is sealed with a cap assembly 6 to complete the lithium battery 1. The battery case 5 is cylindrical, but is not necessarily limited to this shape, and, for example, the shape of the battery case 5 may be a square, a thin film, and/or the like.

A pouch type lithium battery (e.g., a pouch lithium battery) includes at least one cell structure. A separator is disposed (e.g., positioned) between a cathode and an anode to form a cell structure. After the cell structure is stacked in a bi-cell structure, it is impregnated with an organic electrolytic solution, and is accommodated and sealed in a pouch to complete the pouch lithium battery. A plurality of cell structures are stacked to form a battery pack, and this battery pack may be used in devices requiring high capacity and high output. For example, the battery pack according to the present embodiments may be used in notebook computers, smart phones, electric vehicle, and/or the like.

Because the lithium battery has excellent (or improved) lifetime characteristics and high-rate characteristics, it may be used in electric vehicles (EVs). For example, the lithium battery may be used in hybrid vehicles such as plug-in hybrid electric vehicles (PHEVs). Further, the lithium battery may be used in fields (e.g., for applications) where a large amount of power storage is required. For example, the lithium battery may be used in electric bicycles, power tools, and/or the like.

**EP 3 923 380 B1**

A method of preparing a composite cathode active material includes: providing a lithium transition metal oxide; providing a composite; and mechanically milling the lithium transition metal oxide and the composite, wherein the composite includes at least one first metal oxide represented by Formula $M_aO_b$ (0<a≤3, 0<b<4, when a is 1, 2, or 3, b is not an integer), and carbonaceous material (e.g. graphene), the first metal oxide is disposed within a carbonaceous material matrix, M is at least one metal selected from groups 2 to 13, group 15, and group 16 of the Periodic Table of Elements, the lithium transition metal oxide contains nickel, and the content of nickel is about 80 mol% or more based on the total moles of transition metal.

The lithium transition metal oxide is, for example, the above-described compound represented by any one of Formulae 1 to 3.

The providing the composite includes, for example, supplying a reaction gas including a carbon source gas to a structure including a metal oxide, and performing heat treatment.

The providing the composite includes, for example, supplying a reaction gas including a carbon source gas to a second metal oxide represented by Formula $M_aO_c$ (0<a≤3, 0<c≤4, when a is 1, 2, or 3, c is an integer) and performing heat treatment, and M is at least one metal selected from groups 2 to 13, group 15, and group 16 of the Periodic Table of Elements.

The carbon source gas may be a compound represented by Formula 4 below, or may be a mixed gas of the compound represented by Formula 4 and at least one selected from a compound represented by Formula 5 below and an oxygen-containing gas represented by Formula 6 below.

$$\text{Formula 4} \qquad CnH_{(2n+2-a)}[OH]_a,$$

in Formula 4, n is 1 to 20 and a is 0 or 1;

$$\text{Formula 5} \qquad CnH_{2n},$$

in Formula 5, n is 2 to 6; and

$$\text{Formula 6} \qquad C_xH_yO_z,$$

in Formula 6, x is an integer of 0 or 1 to 20, y is an integer of 0 or 1 to 20, and z is 1 or 2.

For example, the compound represented by Formula 4 and the compound represented by Formula 5 includes at least one selected from methane, ethylene, propylene, methanol, ethanol, and propanol. The oxygen-containing gas represented by Formula 6 includes carbon dioxide ($CO_2$), carbon monoxide (CO), water vapor ($H_2O$), or a mixture thereof.

After supplying a reaction gas including a carbon source gas to a second metal oxide represented by $M_aO_c$ (0<a≤3, 0<c≤4, when a is 1, 2, or 3, c is an integer) and performing heat treatment, a cooling process using at least one inert gas selected from nitrogen, helium, and argon may be further performed. The cooling process refers to a process of adjusting temperature to room temperature (about 20 °C to about 25 °C). The carbon source gas may include at least one inert gas selected from nitrogen, helium, and argon.

In the method of preparing the composite, the process of growing carbonaceous material for example graphene according to a gas phase reaction may be performed under various conditions.

According to a first condition, for example, first, methane is supplied to a reactor provided with the second metal oxide represented by $M_aO_c$ (0<a≤3, 0<c≤4, when a is 1, 2, or 3, c is an integer), and is heated to heat treatment temperature (T). For example, the heating time up to heat treatment temperature (T) is about 10 minutes to about 4 hours, and the heat treatment temperature (T) is about 700 °C to about 1100 °C. Heat treatment is performed at the heat treatment temperature (T) for a reaction time. The reaction time is, for example, about 4 hours to about 8 hours. The resultant product of heat treatment is cooled to room temperature to prepare a composite. The time taken to perform the process of cooling the resultant product from the heat treatment temperature to room temperature is, for example, about 1 hour to 5 hours.

According to a second condition, for example, first, hydrogen is supplied to a reactor provided with the second metal oxide represented by $M_aO_c$ (0<a≤3, 0<c≤4, when a is 1, 2, or 3, c is an integer), and is heated to heat treatment temperature (T). For example, the heating time up to heat treatment temperature (T) is about 10 minutes to about 4 hours, and the heat treatment temperature (T) is about 700 °C to about 1100 °C. After heat treatment is performed at the heat treatment temperature (T) for a set or predetermined reaction time, methane gas is supplied, and heat treatment is performed for residual reaction time. The reaction time is, for example, about 4 hours to about 8 hours. The resultant product of heat treatment is cooled to room temperature to prepare a composite. For example, nitrogen is supplied during the process of cooling the resultant product. The time taken to perform the process of cooling the resultant product from the heat treatment temperature to room temperature is, for example, about 1 hour to 5 hours.

According to a third condition, for example, first, hydrogen is supplied to a reactor provided with the second metal

oxide represented by $M_aO_c$ ($0<a\leq3$, $0<c\leq4$, when a is 1, 2, or 3, c is an integer), and is heated to heat treatment temperature (T). For example, the heating time up to heat treatment temperature (T) is about 10 minutes to about 4 hours, and the heat treatment temperature (T) is about 700 °C to about 1100 °C. After heat treatment is performed at the heat treatment temperature (T) for a set or predetermined reaction time, a mixed gas of methane and hydrogen is supplied, and heat treatment is performed for residual reaction time. The reaction time is, for example, about 4 hours to about 8 hours. The resultant product of heat treatment is cooled to room temperature to prepare a composite. For example, nitrogen is supplied during the process of cooling the resultant product. The time taken to perform the process of cooling the resultant product from the heat treatment temperature to room temperature is, for example, about 1 hour to 5 hours.

In the process of preparing the composite, when the carbon source gas includes water vapor, a composite having very excellent (or improved) conductivity may be obtained. The content of water vapor in the gas mixture is not limited, and is, for example, about 0.01 vol% to about 10 vol% based on 100 vol% of the total carbon source gas. The carbon source gas may be, for example, methane; a mixed gas containing methane and an inert gas; or a mixed gas containing methane and an oxygen-containing gas.

The carbon source gas may be, for example, methane; a mixed gas of methane and carbon dioxide; or a mixed gas of methane, carbon dioxide and water vapor. The molar ratio of methane and carbon dioxide in the mixed gas of methane and carbon dioxide is about 1: 0.20 to about 1:0.50, about 1: 0.25 to about 1:0.45, or about 1:0.30 to about 1: 0.40. The molar ratio of methane and carbon dioxide and water vapor in the mixed gas of methane and carbon dioxide and water vapor is about 1:0.20 to 0.50: 0.01 to 1.45, about 1: 0.25 to 0.45: 0.10 to 1.35, or about 1: 0.30 to 0.40: 0.50 to 1.0.

The carbon source gas is, for example, carbon monoxide and/or carbon dioxide. The carbon source gas is, for example, a mixed gas of methane and nitrogen. The molar ratio of methane and nitrogen in the mixed gas of methane and nitrogen is about 1: 0.20 to about 1: 0.50, about 1: 0.25 to about 1: 0.45, or about 1: 0.30 to about 1: 0.40. In one or more examples, the carbon source gas may not include an inert gas such as nitrogen.

The heat treatment pressure may be selected in consideration of the heat treatment temperature, the composition of the gas mixture, and the desired coating amount of carbon. The heat treatment pressure may be controlled by adjusting the amount of the inflowing gas mixture and the amount of the outflowing gas mixture. The heat treatment pressure is, for example, about 0.5 atm or more, about 1 atm or more, about 2 atm or more, about 3 atm or more, about 4 atm or more, or about 5 atm or more.

The heat treatment time may be selected in consideration of the heat treatment temperature, the heat treatment pressure, the composition of the gas mixture, and the desired coating amount of carbon. For example, the reaction time at the heat treatment temperature is, for example, about 10 minutes to about 100 hours, about 30 minutes to about 90 hours, or about 50 minutes to about 40 hours. For example, as the heat treatment time increases, the amount of carbon (e.g., graphene) deposited increases, and thus, the electrical properties of the composite may be improved. However, the increase in the amount of deposited carbon may not necessarily be proportional to time. For example, after a set or predetermined period of time, the deposition of carbon (e.g., graphene) may no longer occur, or the deposition rate of carbon (e.g., graphene) may be lowered.

At least one selected from a second metal oxide represented by $M_aO_c$ ($0<a\leq3$, $0<c\leq4$, when a is 1, 2, or 3, c is an integer) and a reduction product thereof, which is a first metal oxide represented by $M_aO_b$ ($0<a\leq3$, $0<b<4$, when a is 1, 2, or 3, b is not an integer) is subjected to uniform (e.g., substantially uniform) carbonaceous material coating, for example, graphene coating, even at relatively low temperature, through the gas phase reaction of the above-described carbon source gas to obtain a composite.

The composite includes a carbonaceous material matrix, for example, graphene matrix having at least one structure selected from a spherical structure, a spiral structure in which a plurality of spherical structures are connected (e.g., coupled) to each other, and a cluster structure in which a plurality of spherical structures are aggregated with each other, and at least one selected from a first metal oxide represented by $M_aO_b$ ($0<a\leq3$, $0<b<4$, when a is 1, 2, or 3, b is not an integer) and a second metal oxide represented by $M_aO_c$ ($0<a\leq3$, $0<c\leq4$, when a is 1, 2, or 3, c is an integer) which are placed in the carbonaceous material matrix, for example, graphene matrix.

Next, the lithium transition metal oxide and the composite are mechanically milled. A Nobilta™ mixer (Hosokawa Micron Ltd.) may be used in the milling. The number of revolutions of the mixer during the milling is, for example, about 1000 rpm to about 2500 rpm. When the milling speed is less than 1000 rpm, the shear force applied to the lithium transition metal oxide and the composite is weak, so it is difficult for the lithium transition metal oxide and the composite to form a chemical bond. When the milling speed is too high, the composite may not be uniformly applied on the lithium transition metal oxide because a formation of the composite is performed in an excessively short time, so it may be difficult to form a uniform and continuous shell. The milling time is, for example, about 5 minutes to about 100 minutes, about 5 minutes to about 60 minutes, or about 5 minutes to about 30 minutes. When the milling time is too short, the composite is not uniformly applied on the lithium transition metal oxide, so it may be difficult to form a uniform and continuous shell. When the milling time is too long, production efficiency may be lowered. The content of the composite may be about 3wt% or less, about 2wt% or less, or about 1wt% or less, based on the total weight of the lithium transition metal oxide and the composite. For example, the content of the composite may be about 0.01 parts by weight to about 3 parts by weight, about 0.1 parts by weight to about 3 parts by weight, about 0.1 parts by weight to about 2 parts by weight, or about 0.1 parts by weight to about 1 part by weight based on 100 parts by weight of a mixture of the lithium transition metal oxide and the composite.

The average particle diameter (D50) of the composite used in the mechanical milling of the lithium transition metal oxide and the composite is, for example, about 1 $\mu$m to about 20 $\mu$m, about 3 $\mu$m to about 15 $\mu$m, or about 5 $\mu$m to about 10 $\mu$m.

The present disclosure will be described in more detail through the following examples and comparative examples. However, these examples are only for illustrative purposes, and the scope of the present disclosure is not limited thereto.

**Preparation of composite**

**Preparation Example 1: $Al_2O_3$@Gr composite**

$Al_2O_3$ particles (average particle diameter: about 15 nm) were introduced into a reactor, and then the temperature in the reactor was increased to 1000 °C under the condition that $CH_4$ was supplied into the reactor at about 300 sccm and about 1 atm for about 30 minutes.

Subsequently, heat treatment was performed while maintaining the temperature at 1000 °C for 7 hours. Subsequently, the temperature in the reactor was adjusted to room temperature (about 20 °C to about 25 °C) to obtain a composite in which $Al_2O_3$ particles and $Al_2O_z$ (0<z<3) particles as a reduction product thereof are embedded in graphene.

The content of alumina included in the composite was 60 wt%.

**Comparative Preparation Example 1: $SiO_2$@Gr composite**

$SiO_2$ particles (average particle diameter: about 15 nm) were introduced into a reactor, and then the temperature in the reactor was increased to 1000 °C under the condition that $CH_4$ was supplied into the reactor at about 300 sccm and about 1 atm for about 30 minutes.

Subsequently, heat treatment was performed while maintaining the temperature at 1000 °C for 7 hours. Subsequently, the temperature in the reactor was adjusted to room temperature (about 20 °C to about 25 °C) to obtain a composite in which $SiO_2$ particles and $SiO_y$ (0<y<2) particles as a reduction product thereof are embedded in graphene.

**Preparation of composite cathode active material**

**Example 1: 0.1 wt% of $Al_2O_3$@Gr composite-coated NCA91 (0.06 wt% of alumina)**

$LiNi_{0.91}Co_{0.05}Al_{0.04}O_2$ (hereinafter, referred to as NCA91) and the composite prepared in Preparation Example 1 were milled at a rotation speed of about 1000 rpm to about 2000 rpm for about 5 minutes to about 30 minutes using a Nobilta™ mixer (Hosokawa, Japan) to obtain a composite cathode active material.

The mixing weight ratio of NCA91 and the composite prepared in Preparation Example 1 was 99.9:0.1.

**Example 2: 0.25 wt% of $Al_2O_3$@Gr composite-coated NCA91 (0.15 wt% of alumina)**

A composite cathode active material was prepared in substantially the same manner as in Example 1, except that the mixing weight ratio of NCA91 and the composite prepared in Preparation Example 1 was changed to 99.75:0.25.

**Example 3: 0.4 wt% of $Al_2O_3$@Gr composite-coated NCA91 (0.24 wt% of alumina)**

A composite cathode active material was prepared in substantially the same manner as in Example 1, except that the mixing weight ratio of NCA91 and the composite prepared in Preparation Example 1 was changed to 99.6:0.4.

**Example 4: 1.0 wt% of $Al_2O_3$@Gr composite-coated NCA91 (0.6 wt% of alumina)**

A composite cathode active material was prepared in substantially the same manner as in Example 1, except that the mixing weight ratio of NCA91 and the composite prepared in Preparation Example 1 was changed to 99.0:1.0.

**Comparative Example 1: bare NCA91**

NCA91 was used as a cathode active material.

**Comparative Example 2: 0.4 wt% of SiO$_2$@Gr composite-coated NCA91 (0.24 wt% of silica)**

A composite cathode active material was prepared in substantially the same manner as in Example 3, except that the **SiO$_2$@Gr** composite prepared in Comparative Preparation Example 1 was used instead of the Al$_2$O$_3$@Gr composite prepared in Preparation Example 1.

**Manufacture of lithium battery (half cell)**

**Example 5**

**Manufacture of cathode**

A mixture obtained by mixing the composite cathode active material prepared in Example 1, a carbon conductive agent (Denka Black), and polyvinylidene fluoride (PVdF) at a weight ratio of 92:4:4 was mixed with N-methylpyrrolidone (NMP) in an agate mortar to prepare a slurry.

The slurry was applied on an aluminum current collector having a thickness of 15 $\mu$m by bar coating, dried at room temperature, further dried in vacuum, and rolled and punched to obtain a cathode plate having a thickness of 55 $\mu$m.

**Manufacture of coin cell**

Each coin cell was manufactured using the obtained cathode plate, where lithium metal was used as a counter electrode and a solution in which a PTFE separator and 1.3M LiPF$_6$ are dissolved in EC (ethylene carbonate) + EMC (ethyl methyl carbonate) + DMC (dimethyl carbonate) (3:4:3 by volume) was used as an electrolyte.

**Examples 6 to 8**

Coin cells were manufactured in substantially the same manner in Example 5, except that the composite cathode active materials prepared in Examples 2 to 4 were respectively used instead of the composite cathode active material prepared in Example 1.

**Comparative Examples 3 and 4**

Coin cells were manufactured in substantially the same manner in Example 5, except that the composite cathode active materials prepared in Comparative Examples 1 and 2 were respectively used instead of the composite cathode active material prepared in Example 1.

**Evaluation Example 1: XPS spectrum evaluation**

In the process of preparing the composite prepared in Preparation Example 1, XPS spectra were measured using Quantum 2000 (Physical Electronics, Inc.) over time. Before heating, XPS spectra of C 1s orbitals and Al 2p orbitals of samples were measured after 1 minute, after 5 minutes, after 30 minutes, after 1 hour, and after 4 hours, respectively. At the initial heating, only the peak for the Al 2p orbital appeared, and the peak for the C 1s orbital did not appear. After 30 minutes, the peak for the C 1s orbital appeared clearly, and the size of the peak for the Al 2p orbital was significantly reduced.

After 30 minutes, near 284.5 eV, peaks for C-C bonds due to graphene growth and C 1s orbitals due to C=C bonds appeared clearly.

As reaction time elapsed, the oxidation number of aluminum decreased, and thus the peak position of the Al 2p orbital was shifted toward a lower binding energy (eV).

Accordingly, it was found that, as the reaction proceeded, graphene was grown on Al$_2$O$_3$ particles, and Al$_2$O$_x$ (0<x<3), which is a reduction product of Al$_2$O$_3$, was produced.

The average contents of carbon and aluminum were measured through XPS analysis results in 10 regions of the composite sample prepared in Preparation Example 1. With respect to the measurement results, a deviation of the aluminum content for each region was calculated. The deviation of the aluminum content was expressed as a percentage of the average value, and this percentage was referred to as uniformity. The percentage of the average value of the deviation of the aluminum content, that is, the uniformity of the aluminum content was 1 %. Therefore, it was found that alumina was uniformly (e.g., substantially uniformly) distributed in the composite prepared in Preparation Example 1.

**Evaluation Example 2: SEM, HR-TEM and SEM-EDX analysis**

The composite prepared in Preparation Example 1, the composite cathode active material prepared in Example 3, and the bare NCA91 of Comparative Example 1 were subjected to scanning electron microscope (SEM) analysis, high-resolution transmission electron microscope (HR-TEM) analysis, and EDX analysis. For SEM-EDX analysis, FEI's Titan 80-300 was used.

The composite prepared in Preparation Example 1 shows a structure in which $Al_2O_3$ particles and $Al_2O_z$ (0<z<3) particles, which are reduction products thereof, are embedded in graphene. It was found that the graphene layer was disposed on the outside of one or more particles selected from $Al_2O_3$ particles and $Al_2O_z$ (0<z<3). One or more particles selected from $Al_2O_3$ particles and $Al_2O_z$ (0<z<3) were uniformly (e.g., substantially uniformly) distributed. At least one selected from $Al_2O_3$ particles and $Al_2O_z$ (0<z<3) has a particle diameter of about 15 nm. The particle diameter of the composite prepared in Preparation Example 1 was about 100 nm to about 200 nm.

It was found that in the composite cathode active material prepared in Example 3, a shell formed by a composite including graphene was disposed on the NCA core.

SEM-EDX analysis for the bare NCA of Comparative Example 1 and the composite cathode active material prepared in Example 3 was carried out.

It was found that the concentration of aluminum (Al) distributed on the surface of the composite cathode active material of Example 3 was increased compared to the surface of the bare NCA cathode active material of Comparative Example 1. Therefore, it was confirmed that in the composite cathode active material of Example 3, the composite prepared in Preparation Example 1 was uniformly (e.g., substantially uniformly) applied on the NCA core to form a shell.

**Evaluation Example 3: XPS spectrum evaluation (graphene-NCA chemical bond)**

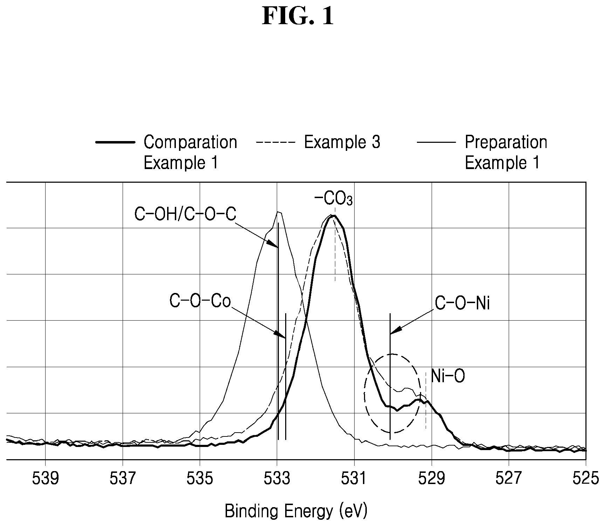

For the composite prepared in Preparation Example 1, the NCA of Comparative Example 1, and the composite cathode active material prepared in Example 3, XPS spectra of O 1s orbitals were measured using Quantum 2000 (Physical Electronics, Inc.), and the results thereof are shown in FIG. 1.

As shown in FIG. 1, for the composite cathode active material of Example 3, a peak due to a C-O-Ni bond was observed around 530.2 eV. This peak was determined to be a peak due to a bond formed between the NiO phase present on the NCA surface and the carbon of graphene. Therefore, it was found that graphene contained in the shell formed on the core forms a covalent bond with Ni, which is a transition metal contained in the core.

**Evaluation Example 4: Raman spectrum evaluation (graphene-NCA chemical bond)**

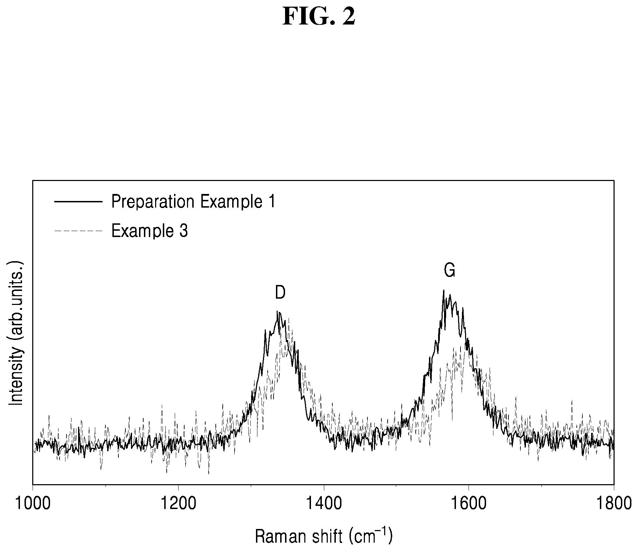

The Raman spectra for the composite prepared in Preparation Example 1 and the composite cathode active material prepared in Example 3 were measured, and the results thereof are shown in FIG. 2.

As shown in FIG. 2, the composite prepared in Preparation Example 1 shows a D band peak at 1338.7 cm-1 and a G band peak at 1575.0 cm-1 due to graphene.

In contrast, in the composite cathode active material of Example 3, the D band peak is shifted to 1351.3 $cm^{-1}$ by about 12 $cm^{-1}$, and the G band peak is shifted to 1593.6 $cm^{-1}$ by about 18 $cm^{-1}$, due to the shell containing graphene.

The shift of the D-band peak was determined to be due to the strain of graphene, which is bonded to the core by milling to form a shell.

The shift of the G-band peak was determined to be due to the charge transfer between the core and the graphene in the composite formed by the C-O-Ni bond between the core and the graphene.

Therefore, it was confirmed that graphene contained in the shell formed on the core forms a covalent bond with Ni, which is a transition metal contained in the core.

**Evaluation Example 5: Evaluation of charge and discharge characteristics at room temperature**

Each of the lithium batteries manufactured in Examples 5 to 8 and Comparative Examples 3 to 4 was charged with a constant current of 0.1 C rate at 25° C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 25° C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) (1st cycle).

Each of the lithium batteries having undergone the 1st cycle was charged with a constant current of 1 C rate at 25° C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 1 C rate until the voltage reached 2.8 V (vs. Li) (2nd cycle). This cycle was repeated (50 repetitions) until the 50th cycle under the same conditions.

In all charge/discharge cycles, a 10-minute stop time was provided after one charge/discharge cycle. Some of the results of the charging and discharging experiments at room temperature are shown in Table 1 below. The capacity retention rate in the 50th cycle is defined by Equation 1 below.

Capacity retention rate[%] = [discharge capacity in 50th cycle / discharge capacity in 1st cycle] × 100     Equation 1

## Evaluation Example 6: Evaluation of charge and discharge characteristics at high temperature (45 °C)

Charge and discharge characteristics were evaluated in the same manner as in Evaluation Example 5, except that the temperature at which charging and discharging are performed was changed to 45 °C.

Some of the results of the charging and discharging experiments at high temperature are shown in Table 1 below.

Table 1

| | Initial capacity 0.2C DCH [mAh/g] | Capacity retention rate at room temperature [%] | Capacity retention rate at high temperature [%] |
|---|---|---|---|
| Example 5: $Al_2O_3$@Gr composite 0.1 wt% coating / NCA91 core | 207.2 | 95.2 | 88.9 |
| Example 6: $Al_2O_3$@Gr composite 0.25 wt% coating / NCA91 core | 207.5 | 97.8 | 92.4 |
| Example 7: $Al_2O_3$@Gr composite 0.4 wt% coating / NCA91 core | 207.2 | 98.0 | 93.2 |
| Example 8: $Al_2O_3$@Gr composite 1.0 wt% coating / NCA91 core | 205.7 | 98.0 | 93.0 |
| Comparative Example 3: Bare NCA91 (no coating) | 207.0 | 93.4 | 85.7 |
| Comparative Example 4: $SiO_2$@Gr composite 0.4wt% coating / NCA91 core | 207.2 | 96.0 | 89.2 |

As shown in Table 1, in the lithium batteries of Examples 5 to 8, room temperature lifetime characteristics and high temperature lifetime characteristics were improved compared to the lithium batteries of Comparative Examples 3 to 4.

## Evaluation Example 7: stability test at high temperature of 60 °C (capacity retention)

In the 1st cycle, at room temperature (25 °C), each of the lithium batteries manufactured in Examples 5 to 8 and Comparative Examples 3 to 4 was charged with a constant current at a rate of 0.5 C until a voltage reached 4.25 V, was charged with a constant voltage while maintaining the voltage at 4.25 V until a current reached 0.05 C, and was discharged at a constant current at a rate of 0.5 C until the voltage reached 2.8 V.

In the 2nd cycle, each of the lithium batteries was charged with a constant current at a rate of 0.5 C until a voltage reached 4.25 V, was charged with a constant voltage while maintaining the voltage at 4.25 V until a current reached 0.05 C, and was discharged at a constant current at a rate of 0.2 C until the voltage reached 2.8 V.

In the 3rd cycle, each of the lithium batteries was charged with a constant current at a rate of 0.5 C until a voltage reached 4.25 V, was charged with a constant voltage while maintaining the voltage at 4.25 V until a current reached 0.05 C, and was discharged at a constant current at a rate of 0.2 C until the voltage reached 2.8 V. The discharge capacity in the 3rd cycle was regarded as standard capacity.

In the 4th cycle, each of the lithium batteries was charged to 4.25 V at a rate of 0.5 C, and was charged with a constant voltage while maintaining the voltage at 4.25 V until a current reached 0.05 C. Then, each of the charged lithium batteries was stored in an oven at 60 °C for 70 days, was taken out of the oven, and was discharged to 2.8 V at a rate of 0.1 C. Some of the charging and discharging results are shown in Table 2 below. The capacity retention rate after high-temperature storage is defined by Equation 3 below.

Capacity retention rate after high-temperature storage [%]= [discharge capacity after high-temperature storage in 4th cycle / standard capacity] $\times$ 100      Equation 3

(The standard capacity is a discharge capacity in the 3rd cycle)

Table 2

|  | Capacity retention rate after storage for 70 days [%] |
|---|---|
| Example 5: Al$_2$O$_3$@Gr composite 0.1wt% coating / NCA91 core | 82.0 |
| Example 6: Al$_2$O$_3$@Gr composite 0.25 wt% coating / NCA91 core | 88.6 |
| Example 7: Al$_2$O$_3$@Gr composite 0.4 wt% coating / NCA91 core | 89.0 |
| Comparative Example 3: Bare NCA91 (no coating) | 65.1 |

As shown in Table 2, in the lithium batteries of Examples 5 to 7, high-temperature stability significantly increased compared to the lithium battery of Comparative Example 3.

**Evaluation Example 8: stability test at high temperature of 60 °C (metal elution)**

In the 1st cycle, at room temperature (25 °C),each of the lithium batteries manufactured in Examples 5 to 8 and Comparative Examples 3 to 4 was charged with a constant current at a rate of 0.5 C until a voltage reached 4.25 V, was charged with a constant voltage while maintaining the voltage at 4.25 V until a current reached 0.05 C, and was discharged at a constant current at a rate of 0.5 C until the voltage reached 2.8 V.

In the 2nd cycle, each of the lithium batteries was charged with a constant current at a rate of 0.5 C until a voltage reached 4.25 V, was charged with a constant voltage while maintaining the voltage at 4.25 V until a current reached 0.05 C, and was discharged at a constant current at a rate of 0.2 C until the voltage reached 2.8 V.

In the 3rd cycle, each of the lithium batteries was charged with a constant current at a rate of 0.5 C until a voltage reached 4.25 V, was charged with a constant voltage while maintaining the voltage at 4.25 V until a current reached 0.05 C, and was discharged at a constant current at a rate of 0.2 C until the voltage reached 2.8 V.

In the 4th cycle, each of the lithium batteries was charged to 4.25 V with a constant current at a rate of 0.5 C, and was charged with a constant voltage while maintaining the voltage at 4.25 V until a current reached 0.05 C. Then, each of the charged lithium batteries was decomposed to separate a cathode, and then the cathode was immersed into the electrolyte used in manufacturing the lithium battery and stored in an oven at 60 °C for 30 days. Then, the content of metal ions eluted in the electrolyte was measured, and some of the results thereof are shown in Table 3 below.

Table 3

|  | Elution amount of Ni after storage for 30 days [mg/kg] | Elution amount of Co after storage for 30 days [mg/kg] |
|---|---|---|
| Example 7: Al$_2$O$_3$@Gr composite 0.4wt% coating / NCA91 core | 980 | 130 |
| Comparative Example 3: Bare NCA91 (no coating) | 1140 | 140 |

As shown in Table 3, in the composite cathode active material of Example 7, the elution of metal ions after high-temperature storage was decreased compared to the cathode active material of Comparative Example 3.

**Evaluation Example 9: Evaluation of gas generation amount at high temperature of 80 °C**

In the 1st cycle, at room temperature (25 °C),each of the lithium batteries manufactured in Examples 5 to 8 and Comparative Examples 3 to 4 was charged with a constant current at a rate of 0.5 C until a voltage reached 4.3 V, was charged with a constant voltage while maintaining the voltage at 4.3 V until a current reached 0.05 C, and was discharged at a constant current at a rate of 0.5 C until the voltage reached 2.8 V.

In the 2nd cycle, each of the lithium batteries was charged with a constant current at a rate of 0.5 C until a voltage reached 4.3 V, was charged with a constant voltage while maintaining the voltage at 4.3 V until a current reached 0.05 C, and was discharged at a constant current at a rate of 0.2 C until the voltage reached 2.8 V.

In the 3rd cycle, each of the lithium batteries was charged with a constant current at a rate of 0.5 C until a voltage reached 4.3 V, was charged with a constant voltage while maintaining the voltage at 4.3 V until a current reached 0.05 C, and was discharged at a constant current at a rate of 0.2 C until the voltage reached 2.8 V.

In the 4th cycle, each of the lithium batteries was charged to 4.3 V with a constant current at a rate of 0.5 C, and was charged with a constant voltage while maintaining the voltage at 4.3 V until a current reached 0.05 C. Then, each of the charged lithium batteries was stored in an oven at 60 °C for 14 days, was taken out of the oven and put into a jig to be burst, and then the amount of gas generated was measured by converting a change in internal gas pressure into volume. The gas generation amount is expressed as the amount of gas generated per unit weight of the cathode active material included in the lithium battery.

Some of the evaluation results are shown in Table 4 below.

Table 4

|  | Gas generation amount (cc/g) |
| --- | --- |
| Example 7: $Al_2O_3$@Gr composite 0.4wt% coating / NCA91 core | 15.5 |
| Comparative Example 5: Bare NCA91 (no coating) | 17.5 |

As shown in Table 4, in the lithium battery of Example 7, the gas generation amount was decreased compared to the lithium battery of Comparative Example 3.

According to embodiments of the present disclosure, because a composite cathode active material includes a shell including a first metal oxide and carbonaceous material, cycle characteristics and high-temperature stability of a lithium battery are improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A composite cathode active material comprising:

   a core comprising a lithium transition metal oxide; and
   a shell on and conformed to a surface of the core,
   wherein the shell comprises at least one first metal oxide represented by $M_aO_b$ (wherein, $0<a\leq3$, $0<b<4$, and when a is 1, 2, or 3, b is not an integer), a second metal oxide represented by Formula $M_aO_c$ (wherein, $0<a\leq3$, $0<c\leq4$, and when a is 1, 2, or 3, c is an integer) and a carbonaceous material,
   the first metal oxide is within a carbonaceous material matrix, M is at least one metal selected from groups 2 to 13, group 15, and group 16 of periodic table of elements,
   the lithium transition metal oxide comprises nickel,
   the nickel is about 80 mol% or more in content based on the total moles of transition metals in the lithium transition metal oxide,
   the second metal oxide comprises the same metal as the first metal oxide, and
   a ratio c/a of c to a in the second metal oxide is greater than a ratio b/a of b to a in the first metal oxide.

2. The composite cathode active material of claim 1, wherein the metal in the first metal oxide is at least one selected from Al, Nb, Mg, Sc, Ti, Zr, V, W, Mn, Fe, Co, Pd, Cu, Ag, Zn, Sb, and Se.

3. The composite cathode active material of claim 1 or claim 2, wherein the first metal oxide is at least one selected from $Al_2O_z(0<z<3)$, $NbO_x(0<x<2.5)$, $MgO_x(0<x<1)$, $Sc_2O_z(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z(0<z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, and $SeO_y(0<y<2)$.

4. The composite cathode active material of any one of claims 1 to 3, wherein the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO,

$Sb_2O_3$, and $SeO_2$.

5. The composite cathode active material of claim 4, wherein the first metal oxide is a reduction product of the second metal oxide.

6. The composite cathode active material of any one of claims 1 to 5, wherein the carbonaceous material in the shell is chemically bonded to a transition metal of the lithium transition metal oxide in the core through chemical bonding,

  carbon atoms (C) of the carbonaceous material in the shell are chemically bonded to a transition metal (Me) of the lithium transition metal oxide utilizing an oxygen atom as an intermediate through C-O-Me bonding, and/or the first metal oxide is chemically bonded to the carbonaceous material through chemical bonding.

7. The composite cathode active material of any one of claims 1 to 6, wherein:

  (i) the shell has a thickness of about 1 nm to about 5 $\mu$m, and/or
  (ii) the composite cathode active material further comprises: a third metal doped on the core; and/or a third metal oxide applied on the core,
  wherein the shell is on the third metal oxide, and
  the third metal oxide is an oxide of at least one selected from Al, Zr, W, and Co.

8. The composite cathode active material of claim 1, wherein the shell comprises at least one selected from a composite of the first metal oxide, the second metal oxide and the carbonaceous material and a resulting product of milling of the composite.

9. The composite cathode active material of claim 8, wherein the composite is about 3 wt% or less in content based on a total weight of the composite cathode active material,

  optionally wherein at least one selected from the first metal oxide and the second metal oxide has an average particle diameter of about 1 nm to about 1 $\mu$m, and
  at least one selected from the first metal oxide and the second metal oxide has a uniformity deviation of about 3 % or less.

10. The composite cathode active material of claim 8 or claim 9, wherein the carbonaceous material has a branched structure, the first metal oxide is distributed in the branched structure, and
the branched structure comprises a plurality of carbonaceous material particles contacting each other.

11. The composite cathode active material of claim 8 or claim 9, wherein the carbonaceous material has at least one structure selected from a spherical structure, a spiral structure in which spherical structures are connected to each other, and a cluster structure in which spherical structures are aggregated with each other,

  the first metal oxide is distributed in the spherical structure, the spherical structure has a size of about 50 nm to about 300 nm, the spiral structure has a size of about 500 nm to about 100 $\mu$m, the cluster structure has a size of about 0.5 mm to about 10 cm,
  the composite is a crumpled faceted-ball structure or a planar structure, at least one selected from the first metal oxide and the second metal oxide is distributed inside the crumpled faceted-ball structure and/or on a surface of the crumpled faceted-ball structure, and
  the carbonaceous material extends from the first metal oxide by a distance of about 10 nm or less, comprises at least 1 to 20 carbonaceous material layers, and has a total thickness of about 0.6 nm to about 12 nm.

12. The composite cathode active material of any one of claims 1 to 11, wherein the lithium transition metal oxide is represented by one of Formulae 1 to 3:

  Formula 1 $\qquad$ $Li_aNi_xCo_yM_zO_{2-b}A_b$,

  in Formula 1,

$$1.0 \leq a \leq 1.2,\ 0 \leq b \leq 0.2,\ 0.8 \leq x < 1,\ 0 < y \leq 0.3,\ 0 < z \leq 0.3,\ \text{and } x+y+z=1,$$

M is at least one selected from manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), and boron (B), and
A is F, S, Cl, Br, or a combination thereof; and

$$\text{Formula 2} \qquad LiNi_xCo_yMn_zO_2,$$

$$\text{Formula 3} \qquad LiNi_xCo_yAl_zO_2$$

in Formulae 2 and 3, $0.8 \leq x \leq 0.95$, $0 < y \leq 0.2$, $0 < z \leq 0.2$, and $x+y+z=1$.

13. A cathode comprising the composite cathode active material of any one of claims 1 to 12.

14. A lithium battery comprising the cathode of claim 13.

**Patentansprüche**

1. Aktives Kathodenverbundmaterial, umfassend:

    einen Kern, umfassend ein Lithium-Übergangsmetalloxid; und
    eine Hülle auf einer Oberfläche des Kerns und daran angepasst,
    wobei die Hülle mindestens ein erstes Metalloxid, dargestellt durch $M_aO_b$ (wobei $0 < a \leq 3$, $0 < b < 4$, und wenn a 1, 2 oder 3 ist, b keine ganze Zahl ist), ein zweites Metalloxid, dargestellt durch Formel $M_aO_c$ (wobei $0 < a \leq 3$, $0 < c \leq 4$, und wenn a 1, 2, oder 3 ist, c eine ganze Zahl ist) und ein kohlenstoffhaltiges Material umfasst,
    das erste Metalloxid sich in einer Matrix aus kohlenstoffhaltigem Material befindet, wobei M mindestens ein Metall ist, ausgewählt aus den Gruppen 2 bis 13, der Gruppe 15 und der Gruppe 16 des Periodensystems der Elemente,
    das Lithium-Übergangsmetalloxid Nickel umfasst,
    der Nickelgehalt etwa 80 Mol - % oder mehr beträgt, bezogen auf die Gesamtmolzahl von Übergangsmetallen im Lithium-Übergangsmetalloxid,
    das zweite Metalloxid das gleiche Metall wie das erste Metalloxid umfasst, und
    ein Verhältnis c/a von c zu a im zweiten Metalloxid größer ist als ein Verhältnis b/a von b zu a im ersten Metalloxid.

2. Aktives Kathodenverbundmaterial nach Anspruch 1, wobei das Metall im ersten Metalloxid mindestens eines ist, ausgewählt aus Al, Nb, Mg, Sc, Ti, Zr, V, W, Mn, Fe, Co, Pd, Cu, Ag, Zn, Sb und Se.

3. Aktives Kathodenverbundmaterial nach Anspruch 1 oder Anspruch 2, wobei das erste Metalloxid mindestens eines ist, ausgewählt aus $Al_2O_z(0 < z < 3)$, $NbO_x(0 < x < 2,5)$, $MgO_x(0 < x < 1)$, $Sc_2O_z(0 < z < 3)$, $TiO_y(0 < y < 2)$, $ZrO_y(0 < y < 2)$, $V_2O_z(0 < z < 3)$, $WO_y(0 < y < 2)$, $MnO_y(0 < y < 2)$, $Fe_2O_z(0 < z < 3)$, $Co_3O_W(0 < w < 4)$, $PdO_x(0 < x < 1)$, $CuO_x(O < x < 1)$, $AgO_x(0 < x < 1)$, $ZnO_x(0 < x < 1)$, $Sb_2O_z(0 < z < 3)$, und $SeO_y(0 < y < 2)$.

4. Aktives Kathodenverbundmaterial nach einem der Ansprüche 1 bis 3, wobei das zweite Metalloxid ausgewählt ist aus $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, und $SeO_2$.

5. Aktives Kathodenverbundmaterial nach Anspruch 4, wobei das erste Metalloxid ein Reduktionsprodukt des zweiten Metalloxids ist.

6. Aktives Kathodenverbundmaterial nach einem der Ansprüche 1 bis 5, wobei das kohlenstoffhaltige Material in der Hülle durch chemische Bindung an ein Übergangsmetall des Lithium-Übergangsmetalloxids im Kern gebunden ist,

    Kohlenstoffatome (C) des kohlenstoffhaltigen Materials in der Hülle durch eine C-O-Me-Bindung unter Verwendung eines Sauerstoffatoms als ein Zwischenprodukt chemisch an ein Übergangsmetall (Me) des Lithium-Übergangsmetalloxids gebunden sind, und/oder
    das erste Metalloxid durch chemische Bindung an das kohlenstoffhaltige Material gebunden ist.

7. Aktives Kathodenverbundmaterial nach einem der Ansprüche 1 bis 6, wobei:

(i) die Hülle eine Dicke von etwa 1 nm bis etwa 5 $\mu$m aufweist, und/oder

(ii) das aktive Kathodenverbundmaterial weiter umfasst: ein drittes Metall, das auf den Kern dotiert ist; und/oder ein drittes Metalloxid, das auf den Kern aufgebracht ist,

wobei sich die Hülle auf dem dritten Metalloxid befindet, und

das dritte Metalloxid ein Oxid von mindestens einem ist, ausgewählt aus Al, Zr, W, und Co.

8. Aktives Kathodenverbundmaterial nach Anspruch 1, wobei die Hülle mindestens eines umfasst, ausgewählt aus einem Verbundmaterial aus dem ersten Metalloxid, dem zweiten Metalloxid und dem kohlenstoffhaltigen Material und einem resultierenden Produkt aus einem Zerkleinern des Verbundmaterials.

9. Aktives Kathodenverbundmaterial nach Anspruch 8, wobei ein Anteil des Verbundmaterials, bezogen auf ein Gesamtgewicht des aktiven Kathodenverbundmaterials, etwa 3 Gew.-% oder weniger beträgt,

wobei optional mindestens eines, ausgewählt aus dem ersten Metalloxid und dem zweiten Metalloxid, einen durchschnittlichen Partikeldurchmesser von etwa 1 nm bis etwa 1 $\mu$m aufweist, und mindestens eines, ausgewählt aus dem ersten Metalloxid und dem zweiten Metalloxid, eine Abweichung einer Gleichmäßigkeit von etwa 3 % oder weniger aufweist.

10. Aktives Kathodenverbundmaterial nach Anspruch 8 oder Anspruch 9, wobei das kohlenstoffhaltige Material eine verzweigte Struktur aufweist, das erste Metalloxid in der verzweigten Struktur verteilt ist, und die verzweigte Struktur eine Vielzahl von Partikeln aus kohlenstoffhaltigem Material umfasst, die miteinander in Kontakt stehen.

11. Aktives Kathodenverbundmaterial nach Anspruch 8 oder Anspruch 9, wobei das kohlenstoffhaltige Material mindestens eine Struktur aufweist, ausgewählt aus einer kugelförmigen Struktur, einer spiralförmigen Struktur, in der kugelförmige Strukturen miteinander verbunden sind, und einer Clusterstruktur, in der kugelförmige Strukturen miteinander aggregiert sind,

das erste Metalloxid in der kugelförmigen Struktur verteilt ist, die kugelförmige Struktur eine Größe von etwa 50 nm bis etwa 300 nm aufweist, die spiralförmige Struktur eine Größe von etwa 500 nm bis etwa 100 $\mu$m aufweist, die Clusterstruktur eine Größe von etwa 0,5 mm bis etwa 10 cm aufweist, das Verbundmaterial eine zerknitterte Struktur aus facettierten Kugeln oder eine ebene Struktur ist, wobei mindestens eines, ausgewählt aus dem ersten Metalloxid und dem zweiten Metalloxid, innerhalb der zerknitterten Struktur aus facettierten Kugeln und/oder auf einer Oberfläche der zerknitterten Struktur aus facettierten Kugeln verteilt ist, und das kohlenstoffhaltige Material um einen Abstand von etwa 10 nm oder weniger über das erste Metalloxid hinausragt, mindestens 1 bis 20 Schichten aus kohlenstoffhaltigem Material umfasst, und eine Gesamtdicke von etwa 0,6 nm bis etwa 12 nm aufweist.

12. Aktives Kathodenverbundmaterial nach einem der Ansprüche 1 bis 11, wobei das Lithium-Übergangsmetalloxid durch eine der Formeln 1 bis 3 dargestellt wird:

Formel 1 $\quad\quad Li_aNi_xCo_yM_zO_{2-b}A_b$,

in Formel 1,

$1,0 \leq a \leq 1,2$, $0 \leq b \leq 0,2$, $0,8 \leq x < 1,0 < y \leq 0,3$, $0 < z \leq 0,3$, und $x + y + z = 1$,

M mindestens eines ist, ausgewählt aus Mangan (Mn), Niob (Nb), Vanadium (V), Magnesium (Mg), Gallium (Ga), Silicium (Si), Wolfram (W), Molybdän (Mo), Eisen (Fe), Chrom (Cr), Kupfer (Cu), Zink (Zn), Titan (Ti), Aluminum (Al), and Bor (B), und

A F, S, Cl, Br, oder eine Kombination davon ist; und

Formel 2 $\quad\quad LiNi_xCo_yMn_zO_2$,

Formel 3 $\quad\quad LiNi_xCo_yAl_zO_2$

in den Formeln 2 und 3, $0,8 \leq x \leq 0,95$, $0 < y \leq 0,2$, $0 < z \leq 0,2$, sowie $x+y+z=1$.

**13.** Kathode, umfassend das aktive Kathodenverbundmaterial nach einem der Ansprüche 1 bis 12.

**14.** Lithiumbatterie, umfassend die Kathode nach Anspruch 13.

**Revendications**

**1.** Matériau actif à cathode composite comprenant :

un noyau comprenant un oxyde métallique de transition au lithium ; et
une coque recouvrant et épousant la surface du noyau,
dans lequel la coque comprend au moins un premier oxyde métallique représenté par $M_aO_b$ (dans lequel, $0 < a \leq 3$, $0 < b < 4$, et lorsque a vaut 1, 2, ou 3, b n'est pas un entier), un deuxième oxyde métallique représenté par la formule $M_aO_c$ (dans lequel, $0 < a \leq 3$, $0 < c \leq 4$, et lorsque a vaut 1, 2, ou 3, c est un entier) et un matériau carboné, le premier oxyde métallique se trouve dans une matrice de matériau carboné, M est au moins un métal choisi parmi les groupes 2 à 13, le groupe 15 et le groupe 16 du tableau périodique des éléments, l'oxyde métallique de transition au lithium comprend du nickel, la teneur en nickel est d'environ 80 % en moles ou plus par rapport au nombre total de moles de métaux de transition dans l'oxyde métallique de transition au lithium, le deuxième oxyde métallique comprend le même métal que le premier oxyde métallique, et un rapport c/a de c à a dans le deuxième oxyde métallique est supérieur à un rapport b/a de b à a dans le premier oxyde métallique.

**2.** Matériau actif de cathode composite selon la revendication 1, dans lequel le métal du premier oxyde métallique est au moins un métal choisi parmi Al, Nb, Mg, Sc, Ti, Zr, V, W, Mn, Fe, Co, Pd, Cu, Ag, Zn, Sb, et Se.

**3.** Matériau actif de cathode composite selon la revendication 1 ou la revendication 2, dans lequel le premier oxyde métallique est au moins un oxyde choisi parmi $Al_2O_z(0<z<3)$, $NbO_x(0<x<2.5)$, $MgO_x(0<x<1)$, $Sc_2O_z(0<z<3)$, $TiO_y$ $(0<y<2)$, $ZrO_y(0<y<2)$, $V_2O_z(0<z<3)$, $WO_y(0<y<2)$, $MnO_y(0<y<2)$, $Fe_2O_z(0<z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, et $SeO_y(0<y<2)$.

**4.** Matériau actif de cathode composite selon l'une quelconque des revendications 1 à 3, dans lequel le deuxième oxyde métallique est choisi parmi $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, et $SeO_2$.

**5.** Matériau actif de cathode composite selon la revendication 4, dans lequel le premier oxyde métallique est un produit de réduction du deuxième oxyde métallique.

**6.** Matériau actif de cathode composite selon l'une quelconque des revendications 1 à 5, dans lequel le matériau carboné de la coque est lié chimiquement à un métal de transition de l'oxyde métallique de transition au lithium dans le noyau par liaison chimique,

des atomes de carbone (C) du matériau carboné de la coque sont liés chimiquement à un métal de transition (Me) de l'oxyde métallique de transition au lithium en utilisant un atome d'oxygène comme intermédiaire par liaison CO-Me, et/ou
le premier oxyde métallique est lié chimiquement au matériau carboné par liaison chimique.

**7.** Matériau actif de cathode composite selon l'une quelconque des revendications 1 à 6, dans lequel :

(i) la coque présente une épaisseur d'environ 1 nm à environ 5 μm, et/ou
(ii) le matériau actif de cathode composite comprend en outre : un troisième métal dopé sur le noyau ; et/ou un troisième oxyde métallique appliqué sur le noyau,
dans lequel la coque repose sur le troisième oxyde métallique, et
le troisième oxyde métallique est un oxyde d'au moins un élément choisi parmi Al, Zr, W, et Co.

**8.** Matériau actif de cathode composite selon la revendication 1, dans lequel la coque comprend au moins un élément choisi parmi un composite du premier oxyde métallique, du deuxième oxyde métallique et du matériau carboné et un produit résultant du broyage du composite.

**9.** Matériau actif de cathode composite selon la revendication 8, dans lequel le composite représente environ 3 % en poids ou moins en teneur par rapport au poids total du matériau actif de cathode composite,

éventuellement, dans lequel au moins un parmi le premier oxyde métallique et le deuxième oxyde métallique présente un diamètre de particule moyen d'environ 1 nm à environ 1 $\mu$m, et
au moins un échantillon sélectionné parmi le premier oxyde métallique et le deuxième oxyde métallique présente un écart d'uniformité d'environ 3 % ou moins.

**10.** Matériau actif de cathode composite selon la revendication 8 ou 9, dans lequel le matériau carboné présente une structure ramifiée, le premier oxyde métallique étant réparti dans la structure ramifiée, et
la structure ramifiée comprend une pluralité de particules de matériau carboné en contact les unes avec les autres.

**11.** Matériau actif de cathode composite selon la revendication 8 ou la revendication 9, dans lequel le matériau carboné présente au moins une structure choisie parmi une structure sphérique, une structure en spirale dans laquelle des structures sphériques sont reliées entre elles, et une structure en amas dans laquelle des structures sphériques sont agrégées les unes aux autres,

le premier oxyde métallique est réparti dans la structure sphérique, dont la taille varie d'environ 50 nm à environ 300 nm ; la structure en spirale présente une taille variant d'environ 500 nm à environ 100 $\mu$m ; et la structure en amas présente une taille variant d'environ 0,5 mm à environ 10 cm,
le composite présente une structure sphérique à facettes froissée ou une structure plane, au moins un élément choisi parmi le premier oxyde métallique et le deuxième oxyde métallique est réparti à l'intérieur de la structure sphérique à facettes froissée et/ou sur une surface de la structure sphérique à facettes froissée, et
le matériau carboné s'étend à partir du premier oxyde métallique sur une distance d'environ 10 nm ou moins, comprend au moins 1 à 20 couches de matériau carboné et présente une épaisseur totale d'environ 0,6 nm à environ 12 nm.

**12.** Matériau actif de cathode composite selon l'une quelconque des revendications 1 à 11, dans lequel l'oxyde métallique de transition au lithium est représenté par l'une des formules 1 à 3 :

Formule 1 $\qquad$ $Li_aNi_xCo_yM_zO_{2-b}A_b$,

dans la Formule 1, $1,0 \leq a \leq 1,2,\ 0 \leq b \leq 0,2,\ 0,8 \leq x < 1,\ 0 < y \leq 0,3,\ 0 < z \leq 0,3,$ et $x+y+z=1$,

M est au moins un élément choisi parmi le manganèse (Mn), le niobium (Nb), le vanadium (V), le magnésium (Mg), le gallium (Ga), le silicium (Si), le tungstène (W), le molybdène (Mo), le fer (Fe), le chrome (Cr), le cuivre (Cu), le zinc (Zn), le titane (Ti), l'aluminium (Al), et le bore (B), et
A est F, S, Cl, Br, ou une combinaison de ceux-ci ; et

Formule 2 $\qquad$ $LiNi_xCo_yMn_zO_2$,

Formule 3 $\qquad$ $LiNi_xCo_yAl_zO_2$

dans les formules 2 et 3, $0,8 \leq x \leq 0,95,\ 0 < y \leq 0,2,\ 0 < z \leq 0,2,$ et $x+y+z=1$.

**13.** Cathode comprenant le matériau actif de cathode composite selon l'une quelconque des revendications 1 à 12.

**14.** Batterie au lithium comprenant la cathode selon la revendication 13.

# FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015037680 A1